# EUROPEAN PATENT APPLICATION

(11) **EP 2 090 922 A1**
(43) Date of publication of application: **19.08.2009**
(21) Application number: 09152718.4
(22) Date of filing: 12.02.2009
(51) Int. Cl.: G02F 1/13, G02F 1/13357

(54) **Tensioned optical element having crimping frame and spring**

(30) Priority: 13.02.2008 US 69748
(71) Applicant: SKC Haas Display Films Co., Ltd., Choongchungnamdo (KR)
(72) Inventor: Laney, Thomas M., Spencerport NY 14559 (US); Best, Kenneth W Jr., Hilton NY 14468 (US)
(74) Representative: Kent, Venetia Katherine

(57) **Abstract**

The invention provides an optical element comprising at least one optical film wherein at least a portion of the optical film is maintained dimensionally stable by the presence of a mechanism for application of a controlled tensile force to the film. The mechanism for application of a controlled tensile force uses a crimping frame in association with a cantilevered spring which effectively maintains flatness of the film or films. The film preferably comprises a diffuser film which can be combined with other optical films.

## Description

### FIELD OF THE INVENTION

The invention relates to a tensioned optical element and its use in optical displays, and more particularly to liquid crystal displays (LCDs) that may be used in LCD monitors and LCD televisions.

### BACKGROUND OF THE INVENTION

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example some LCD monitors and LCD televisions (LCD-TVs), are directly illuminated using a number of light sources positioned behind the LCD panel. This arrangement is common with larger displays, because the light power requirements, to achieve a certain level of display brightness, increase with the square of the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, and so a diffuser plate is used to smooth the illumination profile at the back of the LCD device.

Some LCD monitors and most LCD-TVs commonly stack an arrangement of light management films adjacent to the diffuser plate on the opposite side from the lamps. These light management films generally comprise collimating diffuser films, prismatic light directing films, and reflective polarizer films. Handling of these individual light management films to manufacture LCD displays is very labor intensive as some films are supplied with protective cover sheets which must be first removed and then each light management film placed in the back light unit of the LCD individually. Also, inventory and tracking of each film individually can add to the total cost to manufacture the LCD display. Further, as these light management films are handled individually there is more risk of damage to the films during the assembly process.

Currently, LCD-TV diffuser plates typically employ a polymeric matrix of polycarbonate, polymethyl methacrylate (PMMA), or copolymers thereof with a variety of dispersed phases that include glass, polystyrene beads, cross-linked PMMA beads, and CaCO₃ particles. These plates are thick and heavy while display manufacturers are always trying to thin the form factor and reduce the weight of displays. The diffuser plates often deform or warp after exposure to the elevated humidity and high temperature caused by the lamps which causes viewing defects in the displays. In addition, the diffuser plates require customized extrusion compounding to distribute the diffusing particles uniformly throughout the polymer matrix, which further increases costs.

U.S. Patent Publication No. 2006/0082699 describes one approach to reducing the cost of diffusion plates by laminating separate layers of a self-supporting substrate and an optically diffuse film. Although this solution is novel the need to use adhesives to laminate these layers together results in reduced efficiency of the system by adding light absorption materials. Also the additional processing cost to laminate the layers together is self-defeating. Also, this previous disclosure does not solve the issue of the thick form factor and heavy weight of the diffuser plate. Nor does this solution address the issue of warping of the diffuser plate.

It is desirable to replace the diffuser plate with an optical diffuser film, which would have a much thinner form factor as well as significantly lower weight. Such a diffuser film should have dimensional stability as well as high optical transmission while maintaining a high level of light uniformization. The diffuser film should also provide the structural support for itself and optionally for the other optical films typically used in the light management arrangement.

### SUMMARY OF THE INVENTION

The present invention provides an optical element comprising an optical film wherein at least a portion of the optical film is maintained dimensionally stable by a mechanism for application of a controlled tensile force to the optical film, wherein the tensile force is applied by a crimping frame, the crimping frame comprising: a first frame component having a semi-circular groove; a second frame component having an extension; wherein the first and second frame components interlock together to crimp the optical film; and a means to fasten the first and second frame components together.

### BRIEF DESCRIPTION OF THE DRAWINGS

FIG. 1 illustrates a typical back-lit liquid crystal display device that uses a diffuser plate;
FIG. 2 illustrates an optical element comprising a polymeric optical diffuser film, which is supported by a controlled tensile force via a frame around the perimeter of the film;
FIG. 3 illustrates another embodiment of an optical element comprising a polymeric optical diffuser film, which is supported by a controlled tensile force via a frame around the perimeter of the film;
FIG. 4 illustrates another embodiment of an optical element comprising a polymeric optical diffuser film, which is supported by a controlled tensile force via a frame around the perimeter of the film;
FIG. 5 illustrates another embodiment of an optical element comprising a polymeric optical diffuser film, which is supported by a controlled tensile force via a frame around the perimeter of the film; and
FIG. 6 illustrates another embodiment of an optical element comprising a polymeric optical diffuser film, which is supported by a controlled tensile force via a frame around the perimeter of the film.

### DETAILED DESCRIPTION OF THE INVENTION

The invention provides an optical element comprising at least one optical film wherein at least a portion of the optical film is maintained dimensionally stable by the presence of a mechanism for application of a controlled tensile force to the film. The mechanism for application of a controlled tensile force uses a crimping frame in association with a cantilevered spring which effectively maintains flatness of the film or films.

The present invention also provides a display and a process for emitting light uniformly. One embodiment of this invention is an optical element comprising a polymeric optical diffuser film which is supported by a controlled tensile force via a frame around the perimeter of the film. The tensile force is applied to the film by a crimping of the film between a top and bottom component of the frame. The film is initially held between the two frame components by a plurality of screws or snaps which protrude through holes or slots at various locations around the perimeter of the film and are subsequently connected to the frame of an LCD backlight. The screws or snaps also fasten the two components of the crimping frame together which once tightened maintain the tension on the film via the crimping affect. A cantilevered spring type mechanism protrudes from one of components of the crimping frame. The combination of the crimping frame and the cantilevered spring mechanism substantially maintain a tension on the film even during environmental test conditions. This optical element is useful in replacing the optical function of diffuser plates typically used today in backlit LCD displays.

Another embodiment of this invention is an optical element comprising a polymeric optical diffuser film which is supported by a controlled tensile force via a frame around the perimeter of the film. The tensile force is applied to the film by a crimping of the film between a top and bottom component of the frame. The bottom component of the frame being integral to the LCD backlight frame. The film is initially held between the two frame components by a plurality of screws or snaps which protrude through holes or slots at various locations around the perimeter of the film. The screws or snaps also fasten the top component of the crimping frame to the backlight unit which once tightened maintain the tension on the film via the crimping affect. A cantilevered spring type mechanism is also sandwiched between the top component of the crimping frame and the backlight unit. The combination of the crimping frame and the sandwiched spring mechanism substantially maintain a tension on the film even during environmental test conditions. This optical element is useful in replacing the optical function of diffuser plates typically used today in backlit LCD displays.

Another embodiment of the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An optical element comprising an arrangement of light management films at least one of which is supported by a controlled tensile force via either tensioning mechanism previously described and connected to a frame around the perimeter of the film is disposed between the light source and the LCD panel so that the light source illuminates the LCD panel through the arrangement of light management films.

The arrangement of light management films comprises a first polymeric optical diffuser film. The arrangement of light management films optionally comprises other optical layers. Other optical layers may include a bead coated collimating diffuser film, a light directing film and a reflective polarizer. The present invention is applicable to liquid crystal displays (LCDs, or LC displays), and is particularly applicable to LCDs that are directly illuminated from behind, for example as are used in LCD monitors and LCD televisions (LCD-TVs).

The diffuser plates typically used in LCD-TVs are based on a polymeric matrix, for example polymethyl methacrylate (PMMA), polycarbonate (PC), or cyclo-olefins, formed as a rigid sheet. The sheet contains diffusing particles, for example, organic particles, inorganic particles or voids (bubbles). These plates often deform or warp after exposure to the elevated temperatures of the light sources used to illuminate the display. These plates also are more expensive to manufacture and to assemble in the final display device.

The invention is directed to a directly illuminated LCD device that has an arrangement of light management films positioned between the LCD panel itself and the light source. The arrangement of light management films includes at least a polymeric optical diffuser film possessing a specific transmission and uniformization function which is supported by a controlled tensile force. The controlled tension force is applied via a frame around the perimeter of the film. The tensile force is applied to the film by a crimping of the film between a top and bottom component of the frame. The film is initially held between the two frame components by a plurality of screws or snaps which protrude through holes or slots at various locations around the perimeter of the film and are subsequently connected to the frame of an LCD backlight. The screws or snaps also fasten the two components of the crimping frame together which once tightened maintain the tension on the film via the crimping affect. A cantilevered spring type mechanism protrudes from one of components of the crimping frame. The combination of the crimping frame and the cantilevered spring mechanism substantially maintain a tension on the film even during environmental test conditions. Optionally other optical films such as bead coated collimating diffuser films, light directing films, and reflective polarizers can be constrained by the frame or by the tensioned film or films. The transmission and haze levels of each component are designed to provide a direct-lit LC display whose brightness is relatively uniform across the display.

Preferred polymeric optical diffuser films of the present invention are simple to manufacture and provide a high degree of flexibility in the materials and processes used in manufacturing. In the present invention, the structural and optical requirements are separated: the tensioning mechanism provides the structural performance and the thin diffusing film, provides the optical performance. By separating these functions, the cost advantages of using thin diffuser sheets can be exploited, to reduce overall costs. By not including a thick substrate with the diffuser film a high level of optical performance and a low manufacturing cost is realized. This also prevents any warping of thick plates as the tensioned film maintains a high degree of uniformity over the design temperature and humidity range. In addition, it is easier to control the diffusion properties more precisely when the diffuser is contained in a film rather than a substrate. Such diffuser properties can also be varied within the diffuser film spatially. Stripes, for instance, created by linear domains in the film having higher or lower loadings of diffusive particles or voids can be utilized. This can be very useful by enabling the film or films supported by the controlled force to be located closer to the linear light sources (typically ccfl's) of a backlit LCD display. This closer spacing is enabled by having stripes of higher diffusive property being aligned directly over the linear light source resulting in uniform light emission from the film. Greater spacings from the light sources to the diffuser film must be made with films which have uniform dispersion of light diffusing particles.

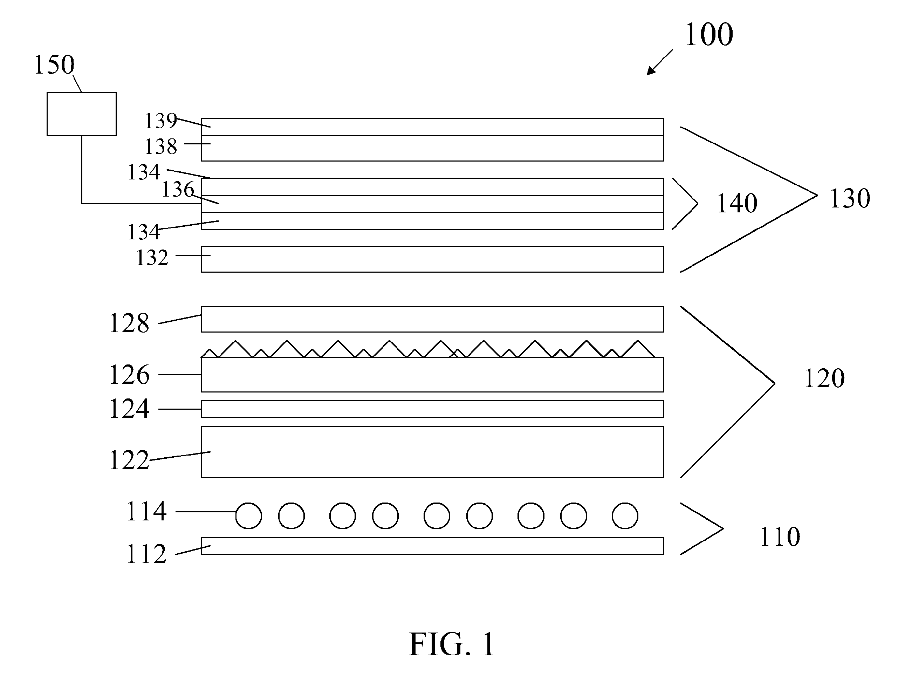

A schematic exploded view of an exemplary embodiment of a direct-lit LC display device **100** is presented in FIG. 1. Such a display device **100** may be used, for example, in an LCD monitor or LCD-TV. The display device **100** is based on the use of a front panel assembly **130,** comprising a LC panel **140,** which typically comprises a layer of LC **136** disposed between panel plates **134.** The plates **134** are often formed of glass, and may include electrode structures and alignment layers on their inner surfaces for controlling the orientation of the liquid crystals in the LC layer **136.** The electrode structures are commonly arranged so as to define LC panel pixels, areas of the LC layer where the orientation of the liquid crystals can be controlled independently of adjacent areas. A color filter may also be included with one or more of the plates **134** for imposing color on the image displayed.

An upper absorbing polarizer **138** is positioned above the LC layer **136** and a lower absorbing polarizer **132** is positioned below the LC layer **136.** The absorbing polarizers **138, 132** and the LC panel **140** in combination control the transmission of light from the backlight **110** through the display **100** to the viewer. In some LC displays, the absorbing polarizers **138, 132** may be arranged with their transmission axes perpendicular. When a pixel of the LC layer **136** is not activated, it may not change the polarization of light passing there through. Accordingly, light that passes through the lower absorbing polarizer **132** is absorbed by the upper absorbing polarizer **138,** when the absorbing polarizers **138, 132** are aligned perpendicularly. When the pixel is activated, on the other, hand, the polarization of the light passing there through is rotated, so that at least some of the light that is transmitted through the lower absorbing polarizer **132** is also transmitted through the upper absorbing polarizer **138.** Selective activation of the different pixels of the LC layer **136,** for example by a controller **150,** results in the light passing out of the display at certain desired locations, thus forming an image seen by the viewer. The controller may include, for example, a computer or a television controller that receives and displays television images. One or more optional layers **139** may be provided over the upper absorbing polarizer **138,** for example to provide mechanical and/or environmental protection to the display surface. In one exemplary embodiment, the layer **139** may include a hardcoat over the absorbing polarizer **138.**

It will be appreciated that some type of LC displays may operate in a manner different from that described above. For example, the absorbing polarizers may be aligned parallel and the LC panel may rotate the polarization of the light when in an unactivated state. Regardless, the basic structure of such displays remains similar to that described above.

The backlight **110** includes a number of light sources **114** that generate the light that illuminates the LC panel **120.** The light sources **114** used in a LCD-TV or LCD monitor are often linear, cold cathode, fluorescent tubes that extend across the display device **100.** Other types of light sources may be used, however, such as filament or arc lamps, light emitting diodes (LEDs), flat fluorescent panels or external fluorescent lamps. This list of light sources is not intended to be limiting or exhaustive, but only exemplary.

The backlight **110** may also include a reflector **112** for reflecting light propagating downwards from the light sources **114,** in a direction away from the LC panel **140.** The reflector **112** may also be useful for recycling light within the display device **100,** as is explained below. The reflector **112** may be a specular reflector or may be a diffuse reflector. One example of a specular reflector that may be used as the reflector **118** is Vikuiti® Enhanced Specular Reflection (ESR) film available from 3M Company, St. Paul, Minn. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement **120** of light management layers is positioned between the backlight **110** and the front panel assembly **130.** The light management layers affect the light propagating from backlight **110** so as to improve the operation of the display device **100 .** For example, the arrangement **120** of light management layers may include a diffuser plate **122.** The diffuser plate **122** is used to diffuse the light received from the light sources, which results in an increase in the uniformity of the illumination light incident on the LC panel **140.** Consequently, this results in an image perceived by the viewer that is more uniformly bright.

The arrangement **120** of light management layers may also include a reflective polarizer **128.** The light sources **114** typically produce unpolarized light but the lower absorbing polarizer **132** only transmits a single polarization state, and so about half of the light generated by the light sources **114** is not transmitted through to the LC layer **136.** The reflecting polarizer **128,** however, may be used to reflect the light that would otherwise be absorbed in the lower absorbing polarizer, and so this light may be recycled by reflection between the reflecting polarizer **128** and the reflector **112.** At least some of the light reflected by the reflecting polarizer **128** may be depolarized, and subsequently returned to the reflecting polarizer **128** in a polarization state that is transmitted through the reflecting polarizer **128** and the lower absorbing polarizer **132** to the LC layer **136.** In this manner, the reflecting polarizer **128** may be used to increase the fraction of light emitted by the light sources **114** that reaches the LC layer **136,** and so the image produced by the display device **100** is brighter.

Any suitable type of reflective polarizer may be used, for example, multilayer optical film (MOF) reflective polarizers; diffusely reflective polarizing film (DRPF), such as continuous/disperse phase polarizers, wire grid reflective polarizers or cholesteric reflective polarizers.

The arrangement **120** of light management layers may also include a light directing film **126.** A light directing film is one that includes a surface structure that redirects off-axis light in a direction closer to the axis of the display. This increases the amount of light propagating on-axis through the LC layer **136,** thus increasing the brightness of the image seen by the viewer. One example is a prismatic light directing film, which has a number of prismatic ridges that redirect the illumination light, through refraction and reflection.

Unlike diffuser plates and stacked optical films used in conventional LCD-TVs, the present invention uses an arrangement of light management films at least one of which is supported by a controlled tensile force. Typically the controlled tensile force is provided via a frame around the perimeter of the film. The tensile force is applied to the film, for example, by a crimping of the film between a top and bottom component of the frame. The film is initially held between the two frame components by a plurality of screws or snaps which protrude through holes or slots at various locations around the perimeter of the film and are subsequently connected to the frame of an LCD backlight. The screws or snaps once tightened also fasten the two components of the crimping frame together which maintains the tension on the film via the crimping affect. A cantilevered spring type mechanism protrudes from the bottom component of the crimping frame which helps maintain tension even during environmental testing. This optical element is useful in replacing the optical function of diffuser plates and optionally the other optical films in an LCD display.

A "spring" is defined here as any mechanism that can substantially maintain a uniform tensile force over a range of motion. That range of motion must be at least as large a distance as the maximum expected change in dimension of the film under the design temperature and humidity ranges. Substantially maintained is defined here as maintaining the tensile force to at least 25% of the original force. Preferably the force can be maintained to at least 50% of the original force. The term "film" is defined here as a sheet of material that has a thickness of less than 500 um.

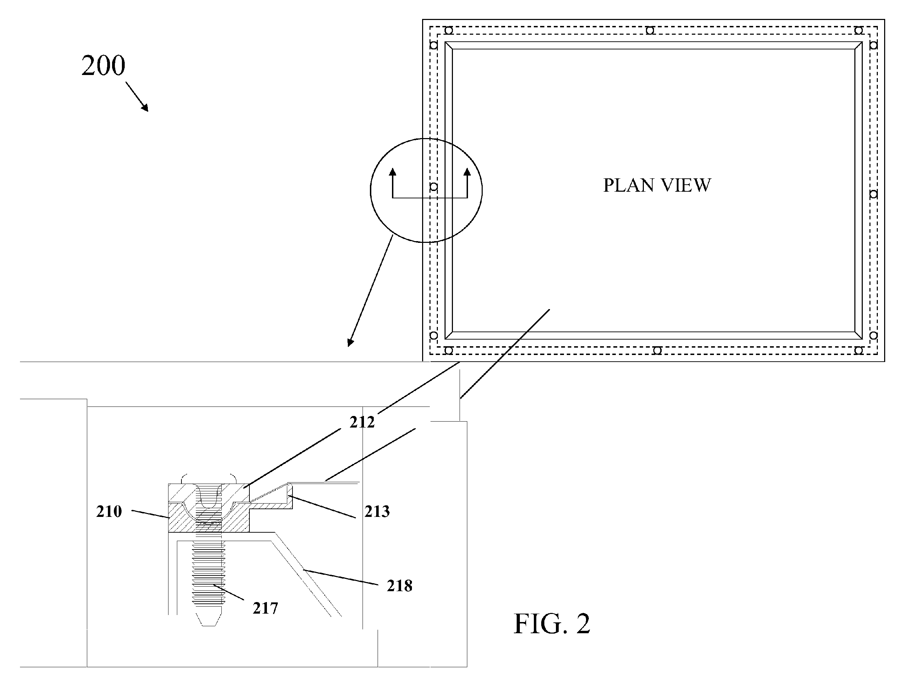

One exemplary embodiment of the optical element of the present invention is schematically illustrated in FIG. 2. The optical element **200** includes a polymeric optical diffuser film **214** and a two supporting frame components **210** and **212** located around the perimeter of the film. Perimeter is defined here as an imaginary continuous line drawn along all thin edges of the film. Typically for LDC displays there are 4 orthogonal edges creating a rectangular perimeter. Other optical films can also be added to the arrangement of light management layers above the polymeric optical diffuser film as will be illustrated in a subsequent figure. Figure 2 shows one means by which the optical diffuser film **214** is supported by a tensile force. Frame components **210** and **212** have a semi-circular groove and extension, respectively, which interlock together. Screws or snap pins **217** protrude through slots or holes in both the frame components **210** and **212** and the film **214.** The screw or pin **217** is fastened to a frame of an LCD backlight **218.** As the screw or pin **217** is tightened, by fully compressing into the backlight frame **218,** the two components of the frame **210** and **212** crimp the film creating a tension in the film. The initial tension in the film can be varied by varying the radius of the groove and extension in the frame components **210** and **212.** The initial tension resulting from crimping, however, can be reduced during elevated temperature such as during environmental testing. In order to maintain a tension near that of the initial tension during such conditions a cantilevered spring **213** is utilized. The spring **213** is deflected upon crimping and initial tensioning. If the film expands during elevated temperatures, the spring recoils acting to maintain tension in the film.

The tensioned optical diffuser film **214** is self-supporting. Here self-supporting is defined as maintaining a planar uniformity of the film under the films own weight plus the addition of the weight of any other optical films to be used in the light management arrangement. Planar uniformity is defined as having an out of plane deflection from original position of less than 180^{th} of the length of the longest side of the diffuser film.

The tensioned diffuser film **214** and one or more other light management layers may be included in a light management arrangement disposed between the backlight and the LCD panel. The tensioned diffuser film **214** provides a stable structure for supporting the light management arrangement. The tensioned film is not prone to warping like conventional diffuser plate systems.

Exemplary embodiments of the polymeric optical diffuser film **214** include an asymmetric diffuser films. Such polymeric asymmetric diffuser films are either volume diffusers whereby the light diffusing structures are in the bulk of the film or they are surface diffusers whereby the light diffusing structures are on the surface of the film.

### Asymmetric Volume Diffuser Films

Asymmetric volume diffusers have regions in the bulk of the film that comprise non-spherical domains that are at least somewhat aligned in terms of their major axes. These domains have a refractive index that differs from the matrix polymer of the film.

Asymmetric volume diffusers may contain more than one diffusing region or layers. One or more of the diffusing regions may have an asymmetric diffusion profile. In a preferred embodiment, a rigid, substantially transparent material separates two diffusing regions. In a preferred embodiment, the asymmetrically diffusive regions are aligned such that the luminance uniformity of a backlight is improved. In another preferred embodiment, the spatial luminance profile of a backlight using a linear or grid array of light sources is substantially uniform through the use of one or more asymmetrically diffusing regions.

The amount of diffusion in the x-z and y-z planes affects the luminance uniformity and the potential viewing angle of the backlight and display. By increasing the amount of diffusion in one plane preferentially over that in the other plane, the viewing angle is asymmetrically increased. For example, with more diffusion in the x-z plane than the y-z plane, the viewing angle of the display (related to the luminance and display contrast) can be increased in the x direction. The diffusion asymmetry introduced through one or more diffusing layers of an asymmetric diffuser film in a backlight can allow for greater control over the viewing angle and angular intensity profile of the display and the optical efficiency of the backlight and display system. In another embodiment, amount of diffusion varies in the plane of the diffusing layer. In another embodiment, the amount of diffusion varies in the plane perpendicular to the plane of the layer (z direction). In a preferred embodiment, the amount of diffusion is higher in the regions in close proximity of one or more of the light sources.

The alignment of the axis of stronger diffusion in an asymmetric diffuser may be aligned parallel, perpendicular or at an angle with respect to a light source or edge of the backlight. In a preferred embodiment, the axis of stronger diffusion is aligned perpendicular to the length of a linear light source in a backlight.

The particles within one or more asymmetric diffuser layers may be fibrous, spheroidal, cylindrical, other non-symmetric shape, or a combination of one or more of these shapes. The shape of the particles may be engineered such that substantially more diffusion occurs in the x-z plane than that in the y-z plane. The shape of the particles or domains may vary spatially along one or more of the x, y, or z directions. The variation may be regular, semi-random, or random.

The particles within a diffusing layer may be aligned at an angle normal, parallel, or an angle with respect to an edge of the diffusing layer or a linear light source or array of light sources. In a preferred embodiment, the particles in a diffusing layer are substantially aligned along one axis that is parallel to a linear array of light sources.

The particles may be contained within the volume of a continuous phase material or they may be protruding from the surface or substantially planar surface of the continuous phase material.

The particles described herein in one or more light diffusing layers may be in a low or high concentration. When the diffusion layer is thick, a lower concentration of particles is needed. When the light diffusing layer is thin, a higher concentration of particles is needed. The concentration of the dispersed phase may be from less than 1% by weight to 50% by weight. In certain conditions, a concentration of particles higher than 50% may be achieved by careful selection of materials and manufacturing techniques. A higher concentration permits a thinner diffusive layer and as a result, a thinner backlight and display.

The refractive index difference between the particles and the matrix may be very small or large. If the refractive index difference is small, then a higher concentration of particles may be required to achieve sufficient diffusion in one or more directions. If the refractive index difference is large, then fewer particles (lower concentration) are typically required to achieve sufficient diffusion and luminance uniformity. The refractive index difference between the particles and the matrix may be zero or larger than zero in one or more of the x, y, or z directions.

The refractive index of the individual polymeric phases is one factor that contributes to the degree of light scattering by the film. Combinations of low and high refractive index materials result in larger diffusion angles. In cases where birefringent materials are used, the refractive indexes in the x, y, and z directions can each affect the amount of diffusion or reflection in the processed material. In some applications, one may use specific polymers for specific qualities such as thermal, mechanical, or low-cost, however, the refractive index difference between the materials (in the x, y, or z directions, or some combination thereof) may not be suitable to generate the desired amount of diffusion or other optical characteristic such as reflection. In these cases, it is known in the field to use small particles, typically less than 1 micron in size to increase or decrease the average bulk refractive index. Preferably, light does not directly scatter from these added particles, and the addition of these particles does not substantially increase the absorption or backscatter.

Additive particles can increase or decrease the average refractive index based on the amount of the particles and the refractive index of the polymer to which they are added, and the effective refractive index of the particle. Such additives can include: aerogels, sol-gel materials, silica, kaolin, alumina, fine particles of MgF₂ (index of refraction is 1.38), SiO₂ (index of refraction is 1.46), AlF₃ (index of refraction is 1.33-1.39), CaF₂ (index of refraction is 1.44), LiF (index of refraction is 1.36-1.37), NaF (index of refraction is 1.32-1.34) and ThF₄ (index of refraction is 1.45-1.5) or the like can be considered. Alternatively, fine particles having a high index of refraction, may be used such as fine particles of titania (TiO₂) or zirconia (ZrO₂) or other metal oxides.

One or more surfaces of the diffusing layer may contain a non-planar surface. The surface profile may contain protrusions or pits that may range from 1 nm to 3 mm in the x, y, or z directions. The profile or individual features may have periodic, random, semi-random, or other uniform or non-uniform structure. The surface features may be designed to provide function to the diffuser plate such as collimation, anti-blocking, refraction, symmetric diffusion, asymmetric diffusion or diffraction. In a preferred embodiment, the surface features are a linear array of prismatic structures that provide collimation properties. In another preferred embodiment, the surface contains hemispherical protrusions that prevent wet-out, provide anti-blocking properties, or light collimating properties.

One or more surfaces of the diffusing layer may contain surface profiles that provide collimation properties. The collimation properties direct light rays incident from large angles into angles closer to the display normal (smaller angles). The features may be in the form of a linear array of prisms, an array of pyramids, an array of cones, an array of hemispheres or other feature that is known to direct more light into the direction normal to the surface of the backlight. The array of features may be regular, irregular, random, ordered, semi-random or other arrangement where light is can be collimated through refraction, reflection, total internal reflection, diffraction, or scattering.

The enhanced asymmetric diffuser of this invention may contain materials, additives, components, blends, coatings, treatments, layers or regions that provide additional optical, mechanical, environmental, thermal or electrical benefits. The properties of the diffuser film may include one or more of the following: Optical: increased optical throughput, increased/decreased diffusion along one or more axis, reduced or increased birefringence, increased luminance uniformity, improved color stability, reduced haze; Mechanical/Physical: increase rigidity, reduced thickness, reduced weight, increased scratch resistance, reduced/increased pencil hardness, anti-blocking features; Environment: reduced warpage, increased light resistance, increased moisture resistance, increased light resistance, increased ultraviolet absorption; Thermal: increased thermal resistance, increased softening temperature; Electrical: decreased surface resistance

### Asymmetric Surface Diffuser Films

Asymmetric surface diffusers have structures on the surface of the film that comprise holographic structures or non-spherical domains that are at least somewhat aligned in terms of their major axes. Holographic structures are typically embossed onto the film from recorded material tools. Non-spherical domains have a refractive index that differs from the matrix polymer of the film. One embodiment of the non-spherical domains that are at least somewhat aligned are a close-packed array of anamorphic microlenses. "Anamorphic" refers to a feature producing different magnification of an image in each of two perpendicular directions.

### Asymmetric Diffuser Film Composition

The diffuser film may be composed of one or more light scattering regions containing a continuous phase and a dispersed phase. In another embodiment, the diffuser film may contain a region of light scattering surface features that exhibit asymmetric scattering properties. In another embodiment, one or more of the diffusing layers may be an adhesive joining two or more components of the asymmetric diffuser film. The film may also contain a substrate that may be substantially optically transparent and a continuous phase. The materials chosen for the substrate, dispersed, or continuous phases may be one or more polymeric or inorganic materials.

Such polymers include, but are not limited to acrylics, styrenics, olefins, polycarbonates, polyesters, cellulosics, polyester-carbonates, and the like. Specific examples include poly(methyl methacrylate) and copolymers thereof, polystyrene and copolymers thereof, poly(styrene-co-acrylonitrile), polyethylene and copolymers thereof, polypropylene and copolymers thereof, poly(ethylenepropylene) copolymers, poly(vinyl acetate) and copolymers thereof, poly(vinyl alcohol) and copolymers thereof, bisphenol-A polycarbonate and copolymers thereof, poly(ethylene terephthalate) and copolymers thereof, poly(ethylene 2,6-naphthalenedicarboxylate) and copolymers thereof, polyarylates, polyamide copolymers, poly(vinyl chloride), cellulose acetate, cellulose acetate butyrate, cellulose acetate propionate, polyetherimide and copolymers thereof, polyethersulfone and copolymers thereof, polysulfone and copolymers thereof, and polysiloxanes.

Numerous methacrylate and acrylate resins are suitable for one or more phases of the present invention. The methacrylates include but are not limited to polymethacrylates such as poly(methyl methacrylate) , poly(ethyl methacrylate), poly(propyl methacrylate), poly(butyl methacrylate), poly(isobutyl methacrylate), methyl methacrylate-methacrylic acid copolymer, methyl methacrylate-acrylate copolymers, and methyl methacrylate-styrene copolymers (e.g., MS resins). The preferred methacrylic resins include poly(alkyl methacrylate)s and copolymers thereof The most preferred methacrylic resins include poly(methyl methacrylate) and copolymers thereof The acrylates include but are not limited to poly(methyl acrylate), poly(ethyl acrylate), and poly(butyl acrylate), and copolymers thereof.

A variety of styrenic resins are suitable for polymeric phases of the present invention. Such resins include vinyl aromatic polymers, such as syndiotactic polystyrene. Syndiotactic vinyl aromatic polymers useful in the present invention include poly(styrene), poly(alkyl styrene)s, poly (aryl styrene)s, poly(styrene halide)s, poly(alkoxy styrene)s, poly(vinyl ester benzoate), poly(vinyl naphthalene) , poly(vinylstyrene), and poly(acenaphthalene), as well as the hydrogenated polymers and mixtures or copolymers containing these structural units. Examples of poly(alkyl styrene)s include the isomers of the following: poly(methyl styrene), poly(ethyl styrene), poly(propyl styrene), and poly(butyl styrene). Examples of poly(aryl styrene)s include the isomers of poly(phenyl styrene). As for the poly(styrene halide)s, examples include the isomers of the following: poly(chlorostyrene), poly(bromostyrene), and poly(fluorostyrene). Examples of poly(alkoxy styrene)s include the isomers of the following: poly(methoxy styrene) and poly(ethoxy styrene). Among these examples, the preferred styrene resin polymers, are: polystyrene, poly(p-methyl styrene) , poly(m-methyl styrene), poly(p-tertiary butyl styrene), poly(p-chlorostyrene), poly(m-chloro styrene), poly(p-fluoro styrene), and copolymers of styrene and p-methyl styrene. The most preferred styrenic resins include polystyrene and copolymers thereof.

Particular polyester and copolyester resins are suitable for phases of the present invention. Such resins include poly(ethylene terephthalate) and copolymers thereof, poly(ethylene 2,6-naphthalenedicarboxylate) and copolymers thereof, poly(1,4-cyclohexandimethylene terephthalate) and copolymers thereof, and copolymers of poly(butylene terephthalate). The acid component of the resin can comprise terephthalic acid, isophthalic acid, 2,6-naphthalenedicarboxylic acid or a mixture of said acids. The polyesters and copolyesters can be modified by minor amounts of other acids or a mixture of acids (or equivalents esters) including, but not limited to, phthalic acid, 4,4'-stilbene dicarboxylic acid, 2,6-naphthalenedicarboxylic acid, oxalic acid, malonic acid, succinic acid, glutaric acid, adipic acid, pimelic acid, suberic acid, azelaic acid, sebacic acid, 1,12-dodecanedioic acid, dimethylmalonic acid, cis-1,4-cyclohexanedicarboxylic acid and trans-1,4-cyclohexanedicarboxylic acid. The glycol component of the resin can comprise ethylene glycol, 1,4-cyclohexanedimethanol, butylene glycol, or a mixture of said glycols. The copolyesters can also be modified by minor amounts of other glycols or a mixture of glycols including, but not limited to, 1,3-trimethylene glycol, 1,4-butanediol, 1,5-pentanediol, 1,6-hexanediol, 1,7-heptanediol, 1,8-octanediol, 1,9-nonanediol, 1,10-decanediol, 1,12-dodecanediol, neopentyl glycol, 2,2,4,4-tetramethyl-1,3-cyclobutanediol, diethylene glycol, bisphenol A and hydroquinone. The preferred polyester resins include copolyesters formed by the reaction of a mixture of terephthalic acid and isophthalic acid or their equivalent esters with a mixture of 1,4-cyclohexanedimethanol and ethylene glycol. The most preferred polyester resins include copolyesters formed by the reaction of terephthalic acid or its equivalent ester with a mixture of 1,4-cyclohexanedimethanol and ethylene glycol.

Certain polycarbonate and copolycarbonate resins are suitable for phases of the present invention. Polycarbonate resins are typically obtained by reacting a diphenol with a carbonate precursor by solution polymerization or melt polymerization. The diphenol is preferably 2,2-bis(4-hydroxyphenyl)propane (so-called "bisphenol A") but other diphenols may be used as part or all of the diphenol. Examples of the other diphenol include 1,1-bis(4-hydroxyphenyl)ethane, 1,1-bis(4-hydroxyphenyl)cyclohexane, 2,2-bis(4-hydroxy-3,5-dimethylphenyl-)propane, 2,2-bis(4-hydroxy-3-methylphenyl)propane, bis(4-hydroxyphenyl) sulfideandbis(4-hydroxyphenyl)sulfone. The polycarbonate resin is preferably a resin which comprises bisphenol A in an amount of 50 mol % or more, particularly preferably 70 mol % or more of the total of all the diphenols. Examples of the carbonate precursor include phosgene, diphenyl carbonate, bischloroformates of the above diphenols, di-p-tolyl carbonate, phenyl-p-tolyl carbonate, di-p-chlorophenyl carbonate and dinaphthyl carbonate. Out of these, phosgene and diphenyl carbonate are particularly preferred.

A number of poly(alkylene) polymers are suitable for phases of the present invention. Such polyalkylene polymers include polyethylene, polypropylene, polybutylene, polyisobutylene, poly(4-methyl) pentene), copolymers thereof, chlorinated variations thereof, and fluorinated variations thereof.

Particular cellulosic resins are suitable for phases of the present invention. Such resins include cellulose acetate, cellulose acetate butyrate, cellulose acetate propionate, cellulose propionate, ethyl cellulose, cellulose nitrate. Cellulosic resins including a variety of plasticizers such as diethyl phthalate are also within the scope of the present invention.

Other preferred embodiments of the polymeric optical diffuser film **214** include semi-crystalline polymer matrix containing voids and void initiating particles or simply diffusive particles like inorganic particles or cross-linked polymeric beads. A semi-crystalline polymer matrix is preferred as it may be substantially transparent to visible light, can be readily stretched, and can possess dimensional stability having a shrinkage of less than 1.0% after being tested at elevated temperatures up to 85C. Preferable polymers to meet all these criteria are polyesters and their copolymers. Most preferred are poly(ethylene terephthalate) (PET); poly(ethylene naphthalate)(PEN)polyesters and any of their copolymers. PET is most suitable as it is much lower in cost than PEN.

The void initiating particles may be any type of particle that is incompatible with the matrix polymer. These particles can be inorganic or organic. Inorganic particles can include any of calcium carbonate, barium sulfate, titanium dioxide, or any other inorganic compound that can be melt blended into a polymer. Typical organic void initiating particles are polymers that are immiscible with the matrix polymer. These are preferred as resin pellets of these immiscible polymers can be simply dry blended with the resin pellets of the matrix polymer and extruded together to form a cast film. Inorganic particles require a pre-mixing or melt compounding, which adds processing cost. Preferred organic void initiating particles are polyolefins. Most preferred is polypropylene.

The void initiating particles should be added so as to produce enough diffusivity to function as a diffuser yet not be so opaque that the optical luminance of the LCD display is significantly reduced. Preferred loadings of the void initiating particles are 3 to 25 wt % of the entire film. The most preferred loadings are 10 to 20 wt%.

The optical diffuser film **214** may be provided with protection from ultraviolet (UV) light, for example by including UV absorbing material or material in one of the layers that is resistant to the effects of UV light. Suitable UV absorbing compounds are available commercially, including, e. g., Cyasorb® UV-1164, available from Cytec Technology Corporation of Wilmington, Del., and Tinuvin® 1577, available from Ciba Specialty Chemicals of Tarrytown, N.Y.

Although not shown in Figure 2, another preferred embodiment of the polymeric optical diffuser film **214** is one with spatially varying domains in the film having higher or lower loadings of diffusive particles or voids. The diffusive domains in these spatially varying diffuser films can be either symmetric or asymmetric in nature. This can be very useful by enabling the film or films supported by the controlled force to be located closer to the light sources (typically ccfl's) of a backlit LCD display. In one case, the closer spacing is enabled by having stripes of higher diffusive property being aligned directly over the linear ccfl light source resulting in uniform light emission from the film. (Greater spacing from the light sources to the diffuser film must be made with films which have uniform dispersion of light diffusing particles.) Other variations than stripes in the diffusive domains can also be utilized. For instance, a dot pattern may be used if the diffuser film is to be utilized along with an array of LED light sources in the backlight.

Other materials may be included in the optical diffuser film **214** to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful HALS composition is Tinuvin 622.

The frame components **210** and **212** can comprise any rigid material, preferably plastic. The cantilevered spring **213** attached to frame component **210,** helps maintain the flatness of the film **214.** The spring can comprise any rigid material, preferably plastic, and is typically fabricated integral with the bottom frame **210.** The optical element **200** of Figure 2 can be used in place of the diffuser plate of conventional LCD displays.

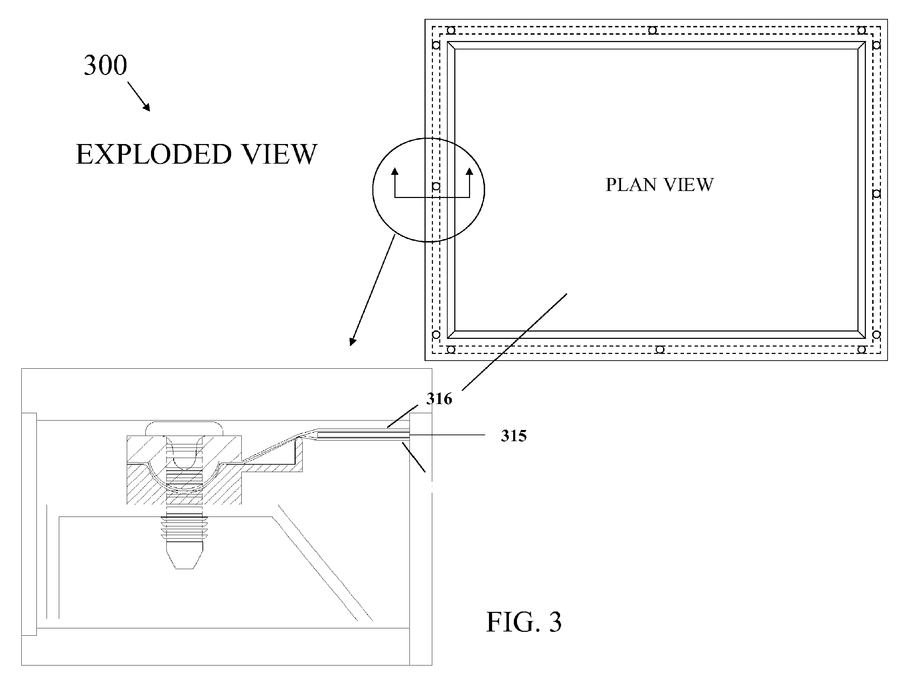

Another exemplary embodiment of the present invention is schematically illustrated in Fig. 3. The optical element **300** discloses, in addition to a diffuser film **314** being tensioned, another film, a light collimating diffuser film **316,** also being tensioned. The film **314** is an optical diffuser film as described for that described for film **214** in Figure 2. In addition a third film **315,** a prismatic light directing film, is supported between the two tensioned films **314** and **316.** The optical element **300** of Figure 3 can be used in place of the diffuser plate and the optional optical films of conventional LCD displays.

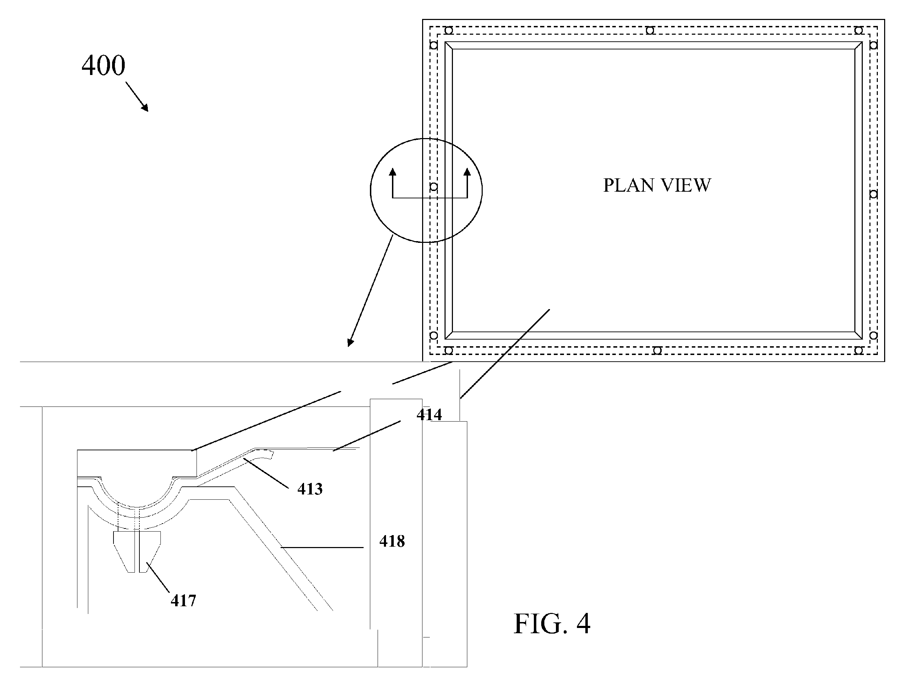

Another exemplary embodiment of the present invention is schematically illustrated in Fig. 4. The optical element **400** utilizes the frame of the LCD backlight unit **418** as the lower component of the crimping frame. This is done by integrating the semi-circular groove into the backlight unit of the LCD. Also, optical element **400** utilizes a separate cantilevered spring element **413,** sandwiched between the top crimping frame component **412** and the back light unit **418.** The film **414** is also an optical diffuser film as described for that of film **214** in Figure 2 and could optionally be more than one film. Also, the snap pin **417** of optical element **400** is integral to the top crimping frame. The top crimping frame **412** and snap pin **417** can be any rigid material but preferably are polymeric and produced by an injection molding process. The cantilevered spring element **413** can comprise plastic or metal. The optical element **400** of Figure 4 can be used in place of the diffuser plate and the optional optical films of conventional LCD displays.

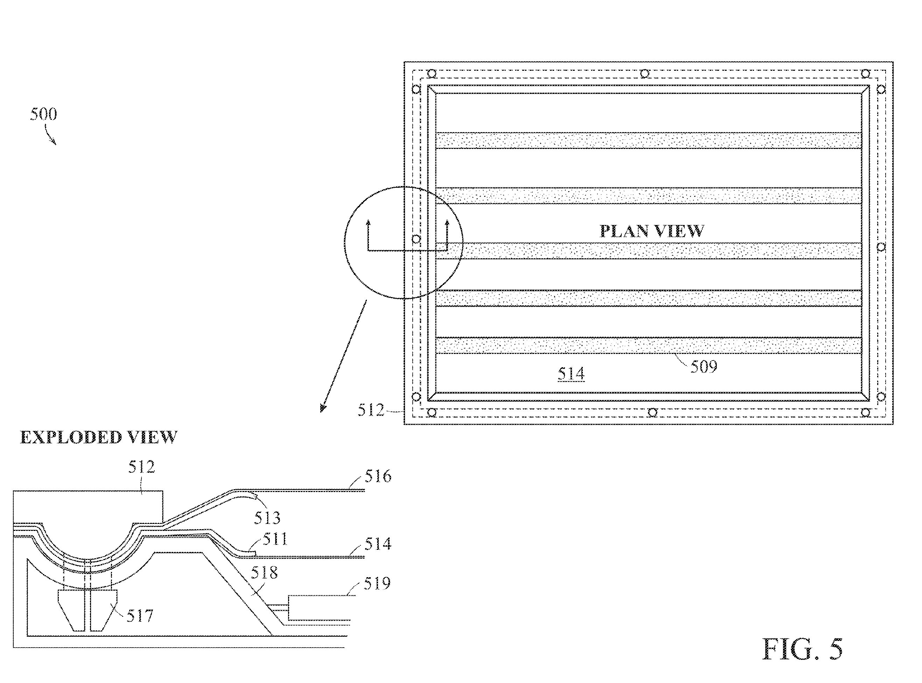

Another exemplary embodiment of the present invention is schematically illustrated in Fig. 5. The optical element **500** is an arrangement of at least two light management films comprising a large space between the bottom film **514** and the upper film or films **516.** The space is maintained by the addition of a second cantilevered spring element **511** which acts to force the elevation of the lower film **514** below that of the upper optical film or films **516.** The elevation of the upper optical film or films is maintained by the cantilevered spring **516** which pushes the upper films **516** in the opposite direction as that of spring **511.** Lower film **514** is a polymeric optical diffuser film and can comprise the same materials as described previously for diffuser film **214.** In this case diffuser film **514** has spatially varying domains of higher diffusive stripes **509** arranged linearly appearing as stripes in the film. These higher diffusive stripes **509** are preferably formed by two or more layers of diffusive particles in a polymer matrix having different widths to thus form a gradient in the diffusivity across the width of the stripe. As in Fig 4 the backlight unit frame **518** has a semi-circular groove so as to act as the lower crimping frame component of the crimping frame. Backlight frame **518** can be designed to hold the tensioned films **514** and **516** at a much closer overall spacing to the ccfl light sources **519** than that of the backlight frame **418** in Fig 4. This closer spacing is enabled by the higher diffusive stripes of optical diffuser film **514** being aligned directly over the ccfl light sources **519.** The top crimping frame component **512** and snap pin **517** can be any rigid material but preferably are polymeric and produced by an injection molding process. The optical element **500** of Figure 5 can be used in place of the diffuser plate and the optional optical films of conventional LCD displays.

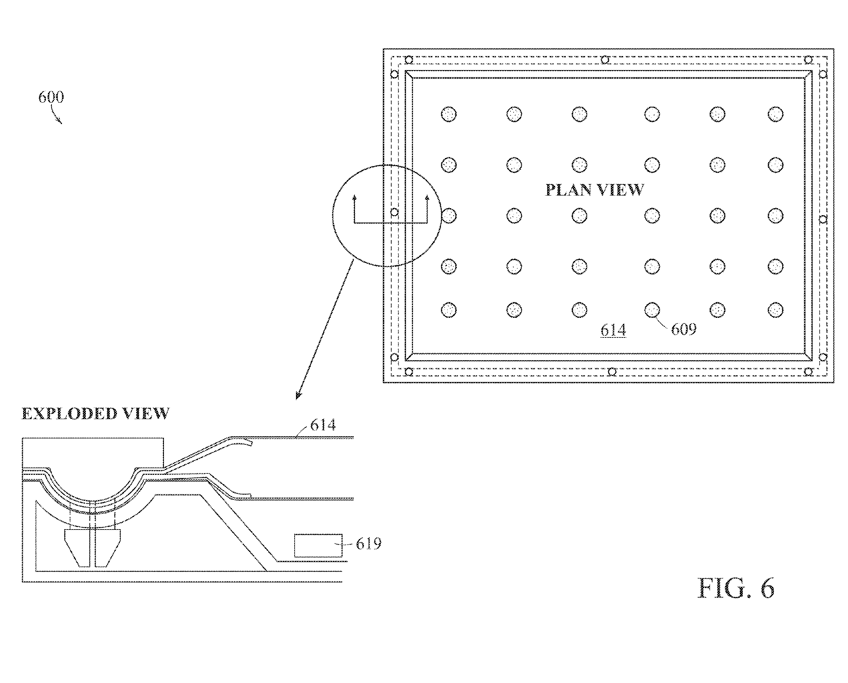

Another exemplary embodiment of the present invention is schematically illustrated in Fig. 6. The optical element **600** discloses a two dimensional array of LED light sources **619** are used. Based on this, the lower optical diffuser film **614** employs a circular dot pattern of higher diffusive domains **609** which align directly over each LED **619.** These circular dots are preferably two or more layers of circular dots with different diameter to thus form a radial gradient in the diffusivity across the width of the dots. The optical diffuser film **614** can comprise the same material as that described for diffuser film **214** in Fig 2. The optical element **600** of Figure 6 can be used in place of the diffuser plate and the optional optical films of conventional LCD displays.

In any of the embodiments where more than one optical film is constrained by the frame or the tensioned films typically none of the optical films are adhered to each other. There may be benefit for two optical films to be adhered to each other from a cost of manufacturing standpoint but typically one or more of the optical films are not adhered to each other.

Therefore, it the object of the present invention to provide an optical element comprising at least one optical film which is supported under a controlled tensile force by a tensioning mechanism such that the film maintains flatness and a high degree of tension over the design temperature and humidity ranges of the optical element. Maintaining a high degree of flatness of the tensioned film requires a unique design of the tensioning mechanism and is the essence of the present invention. It is further the object of the present invention to provide a low cost means to provide the tension to the at least one optical film.

In a preferred embodiment the optical element provides the optical smoothing function of previous plate diffusers at a very low cost. The optical element is unique in that it provides a high level of optical function and meets surface flatness requirements under specified thermal and humidity testing even at low thicknesses. Typically the optical element comprises a supporting frame around the perimeter of the at least one optical film that is supported by a controlled tensile force. Other embodiments of the invention include other light management films also constrained by the supporting frame.

### Example

In order to demonstrate a preferred embodiment of the present invention a commercial LCD TV was procured. The TV chosen was a 42" LG Philips LCD TV, model 42LB5D. The LC panel and the arrangement of light management films were removed from the TV exposing an array of CCFLs in the backlight unit. The backlight unit was next outfitted with a tensioned support arrangement of the present invention as that shown in Fig. 3.

The center film used in the installation as shown in Fig. 3 was the same conventional prismatic collimation film that was originally provided in the 42" LG Phillips TV. The top film used in the installation as shown in Figure 3 was a 100 um bead coated diffuser (Kimoto Ltd's 100-TL4 Diffusion Film). The bottom film(immediately above the CCFLs) used in the tensioned stack-up was a volumetric optical diffuser. This film was made by first melt compounding 5.0 microbeads of cross-linked siloxane particles (Tospearl 145A from Momentive Performance Materials Inc.) into Polyethylene terephthalate (PET #7352 from Eastman Chemicals). Both the Polyethylene terephthalate resin pellets and the microbeads were first dried at 165°C in a desiccant dryer for 24 hours. They were then fed into a 27mm twin screw compounder with the beads being loaded at a 30% by wt. to the compounded blend. The extrudate from the compounder was fed through a water bath and then pelletized.

Next the compounded pellets and the more PET 7352 was dried at 165°C in a desiccant dryer for 24 hours. The PET pellets and the compounded pellets were dry blended with the compounded pellets making up 16% by wt. of the dry blend and the PET 84% by wt. Then the blend was melted at 275°C and fed by a plasticating screw extruder into an extrusion die manifold to produce a melt stream which was rapidly quenched on a chill roll after issuing from the die. By regulating the throughput of the extruder, it was possible to adjust the thickness of the resulting cast sheet. In this case the thickness of the cast sheet was approximately 750 µm. The cast sheet was first oriented in the machine direction by stretching at a ratio of 3.0 and a temperature of 110° C. This sheet was then oriented in the transverse direction in a tenter frame at a ratio of 3.3 and a temperature of 100°C without tearing. The stretched sheet was then heat set at 220°C. The final film thickness was approximately 100 µm.

The 3 films as just described were assembled into a tensioned frame design as that shown in Figure 3. The top component of the crimping frame was machined from aluminum. The bottom component of the crimping frame was produced using a stereo-lithographic process and a UV curable polymer. The tensioned support arrangement as described in Figure 3 using the films described above was fastened to the backlight unit frame around the periphery of the exposed CCFLs using screws spaced every 3 inches around the crimping frame. As the screws were tightened the two outer films were tensioned as they were crimped between the crimping frame components. The cantilevered spring was partially bent by the films resulting in even higher tension in the films. The resulting film stack appeared very flat and free of any buckling. When illuminating the CCFLs the light emitting from the films was very bright and uniform with no apparent waving or warping of the films.

The assembled backlight unit with the tensioned films was next subjected to two different thermal test conditions. The first test was to place the assembled back light into an oven at 65°C for 15 minutes. Upon removing the backlight from the oven the films still appeared very flat and free of any buckling. When illuminating the CCFLs there still was no apparent waving or warping of the films. The second test done consisted of placing insulation directly over the films of the backlight and illuminating the CCFLs at maximum intensity for 15 minutes. Upon removing the insulation there still was no apparent waving or warping of the films.

### Parts List

- 100: direct-lit LC display device
- 110: backlight
- 112: reflector
- 114: light sources
- 120: light management layers
- 122: diffuser plate
- 124: collimating diffuser film
- 126: light directing film
- 128: reflective polarizer
- 130: front LC panel assembly
- 132: lower absorbing polarizer
- 134: panel plates
- 136: LC layer
- 138: upper absorbing po larizer
- 139: optional layer(s)
- 140: LC panel
- 150: controller
- 200: optical element
- 210: lower crimping frame
- 212: top crimping frame
- 213: cantilevered spring
- 214: polymeric optical diffuser film
- 217: screw or snap pin
- 218: backlight frame
- 300: optical element
- 314: polymeric optical diffuser film
- 315: prismatic light directing film
- 316: collimating diffuser film
- 400: optical element
- 412: top crimping frame
- 413: cantilevered spring
- 414: polymeric optical diffuser film
- 417: snap pin
- 418: backlight frame
- 500: optical element
- 509: stripes of higher diffusive domains
- 510: cover frame
- 511: cantilevered spring
- 512: top crimping frame
- 513: cantilevered spring
- 514: polymeric optical diffuser film
- 516: optical film or films
- 517: snap pin
- 518: backlight frame
- 519: ccfl light source
- 600: optical element
- 609: spots of higher diffusive domains
- 619: LED light source

## Claims

1. An optical element comprising an optical film wherein at least a portion of the optical film is maintained dimensionally stable by a mechanism for application of a controlled tensile force to the optical film, wherein the tensile force is applied by a crimping frame, the crimping frame comprising:
a first frame component having a semi-circular groove;
a second frame component having an extension;
wherein the first and second frame components interlock together to crimp the optical film; and
a means to fasten the first and second frame components together.

2. The optical element of claim 1 further comprising one or more cantilevered spring elements.

3. The optical element of claim 1 wherein the at least one optical film is a diffuser film comprising light scattering particles.

4. The optical element of claim 3 wherein the diffuser film is an asymmetric diffuser.

5. The optical element of claim 3 wherein the diffuser film comprises domains with spatially varying concentrations of diffusive particles.

6. The optical element of claim 3 wherein another optical film in addition to the diffuser film is maintained dimensionally stable by the presence of a mechanism for application of a controlled tensile force and is spaced apart from the diffuser film.

7. The optical element of claim 1 comprising two optical films each maintained dimensionally stable by the presence of a mechanism for application of a controlled tensile force and at least one film centered between the two optical films that is further stabilized by the tensioned two optical films.

8. The optical element of claim 7 comprising an optical diffuser film as one of the two optical films, a light collimating diffuser film as the other of the two optical films, and a prismatic light directing film as the centered film.

9. The optical element of claim 1 wherein the means to fasten the first and second frame components together are selected from screws and snap pins.

10. The optical element of claim 1 wherein the means to fasten the first and second frame components together are snap pins that are formed integrally with one of the first or second frame components.
